# FASCICULE DE BREVET EUROPEEN

(11) **EP 0 467 736 B1**
(45) Date de publication et mention de la délivrance du brevet: **13.09.1995**
(21) Numéro de dépôt: 91401817.1
(22) Date de dépôt: 02.07.1991
(51) Int. Cl.: G11B 5/33, G11B 5/39, G11B 5/49

(54) **Tête magnétique de lecture à effet magnéto-résistif**
Magnetoresistiver Effekt verwendender Lesemagnetkopf
Magnetoresistive effect read-out magnetic head

(30) Priorité: 20.07.1990 FR 9009301
(43) Date de publication de la demande: 22.01.1992
(73) Titulaire: THOMSON-CSF, 75008 Paris (FR)
(72) Inventeur: Coutellier, Jean-Marc, Thomson-CSF, SCPI, F-92045 Paris La Défense (FR); Valet, Thierry, Thomson-CSF, SCPI, F-92045 Paris La Défense (FR); Pirot, François-Xavier, Thomson-CSF, SCPI, F-92045 Paris La Défense (FR)
(74) Mandataire: Guérin, Michel

(56) Documents cités:
- FR-A- 2 090 196
- JP-A- 2 058 701
- JP-A-61 153 897
- PATENT ABSTRACTS OF JAPAN vol. 11, no. 358 (P-639)(2805) 21 novembre 1987,& JP-A-62 134814
- PATENT ABSTRACTS OF JAPAN vol. 6, no. 22 (P-101)(900) 09 février 1982,& JP-A-56 143513
- IBM TECHNICAL DISCLOSURE BULLETIN. vol. 19, no. 6, novembre 1976, ARMONK, N.Y.,USA pages 2331 - 2332; J.C. SLONCZEWSKI: "MAGNETIC-FIELD TUNNEL-SENSOR"

## Description

L'invention concerne les têtes magnétiques de lecture dans lesquelles est mis en oeuvre un effet magneto-résistif, à l'aide d'éléments magneto-résistifs du type multicouches.

En prenant pour exemple le cas des têtes magnétiques en rotation, telles que celles encore couramment utilisées notamment dans les magnétoscopes pour constituer des têtes d'enregistrement et de lecture : la vitesse de rotation des têtes magnétiques de lecture est élevée et elle est combinée au déplacement de la bande magnétique, et dans ce cas il est possible d'extraire suffisamment de signal avec une tête de lecture purement inductive. Dans une telle tête de lecture, le champ magnétique issu d'une piste de la bande magnétique, est canalisé par un circuit magnétique et engendre un courant dans un solénoïde associé au circuit magnétique.

Mais les têtes magnétiques tournantes présentent des inconvénients, notamment quand au poids et à l'encombrement des pièces mécaniques qui doivent tourner à vitesse relativement élevée, et aussi en ce qui concerne la fiabilité.

Une alternative aux solutions d'enregistrement à têtes tournantes consiste à enregistrer et à relire les pistes de la bande magnétique, à l'aide de dispositifs fixes par rapport à la bande magnétique : par exemple à l'aide d'un unique dispositif comportant une ou plusieurs têtes magnétiques qui fonctionnent ; soit en écriture c'est-à-dire en enregistrement, soit en lecture ou encore à l'aide de deux dispositifs dont l'un est pour l'écriture et l'autre pour la lecture. Mais le déplacement de la bande magnétique est lent et si les têtes magnétiques sont fixes par rapport à la bande, les variations du champ magnétique se produisent à vitesse relativement faible ( typiquement quelques centimètres par seconde), et il est impossible dans ces conditions d'extraire suffisamment de signal d'une tête purement inductive.

Les têtes magnétiques de lecture qui utilisent l'effet magnéto-résistif peuvent être fixes devant la bande magnétique, tout en délivrant un signal utile suffisant.

Actuellement, des capteurs à effet magnéto-résistif sont mis en oeuvre dans divers dispositifs de lecture de piste magnétique. Ces capteurs sont placés dans la zone d'influence d'une piste magnétique mobile, et l'on détecte leurs variations de résistance électrique en réponse aux variations du champ magnétique enregistré sur la piste magnétique de la bande.

Parmi les alliages couramment utilisés pour constituer un élément ou capteur magnéto-résistif, on peut citer notamment des alliages ferromagnétiques tels que par exemple le Permalloy (Fe₈₀Ni₂₀).

Il est à noter que l'on peut séparer les éléments magnéto-résistifs en deux types :
- le type monocouche dans lequel la résistivité ne dépend que de l'orientation relative de l'aimantation et du courant dans le matériau,
- le type multicouches dans lequel l'effet magnéto-résistif est lié à une diffusion des porteurs dépendante de leur état de spin. La structure multicouches est constitué par un empilement d'au moins deux couches magnétiques séparées par une couche non magnétique, les deux couches magnétiques présentant un couplage de type anti-ferromagnétique. L'une des couches magnétiques appelée dans la suite de la description "couche magnétique sensible", a un champ coercitif largement plus faible que celui de l'autre couche magnétique ; cette autre couche magnétique au champ coercitif plus fort est appelée dans la suite de la description "couche magnétique stable". La couche magnétique sensible étant soumise à l'influence du champ magnétique issu de la piste magnétique, son orientation magnétique bascule, de telle manière que les aimantations des deux couches magnétiques passent d'un état d'arrangement anti-parallèle à un état d'arrangement parallèle ; une variation de la résistivité des deux couches magnétiques se produisant à la transition entre ces deux états.

On peut trouver des explications détaillées sur l'effet magnéto-résistif et la structure des éléments magnéto-résistif du type multicouches dans "Theory of geant magnetoresistance effects in magnetic layered structures with antiferromagnetic coupling", R.E. CAMLEY et al., Phys. Rev. Lett. , V. 63 (6), page 664, 1989..

Il est à noter que les éléments magnéto-résistifs du type multicouches sont d'une plus grande complexité de réalisation que les éléments type monocouches, mais ils offrent l'avantage de fournir un signal utile plus important. En effet, le signal utile c'est-à-dire la variation du courant qui circule dans les couches magnétiques, est lié au rapport de la variation de résistance Δ R à la résistance R entre ces deux couches : ce rapport est de l'ordre de 10 % dans le cas des éléments magnéto-résistifs du type multicouches, alors qu'il n'est que de l'ordre de 3 % dans le cas du type monocouche.

La présente invention s'applique aux têtes magnétiques de lecture incorporant des éléments magnéto-résistifs du type multicouches. Elle a pour but notamment de simplifier la réalisation de telles têtes afin de faciliter leur réalisation collective, aussi bien en vue d'une utilisation unitaire que pour associer un grand nombre de têtes de lecture dans un même dispositif magnétique, en vue par exemple de lire en parallèle un grand nombre de pistes magnétiques.

Un dispositif magnétique de lecture, selon l'invention est défini dans la revendication 1.

L'invention sera mieux comprise à la lecture de la description qui suit, faite à titre d'exemple non limitatif en référence aux trois figures annexées parmi lesquelles :
- la figure 1 montre schématiquement, par une vue en perspective, un dispositif magnétique de lecture selon l'invention ;
- la figure 2 est un schéma électrique qui illustre une manière de réaliser l'adressage de têtes de lecture sélectionnées.
- la figure 3 montre schématiquement une autre forme de réalisation de têtes de lecture magnétiques montrées à la figure 1 ;

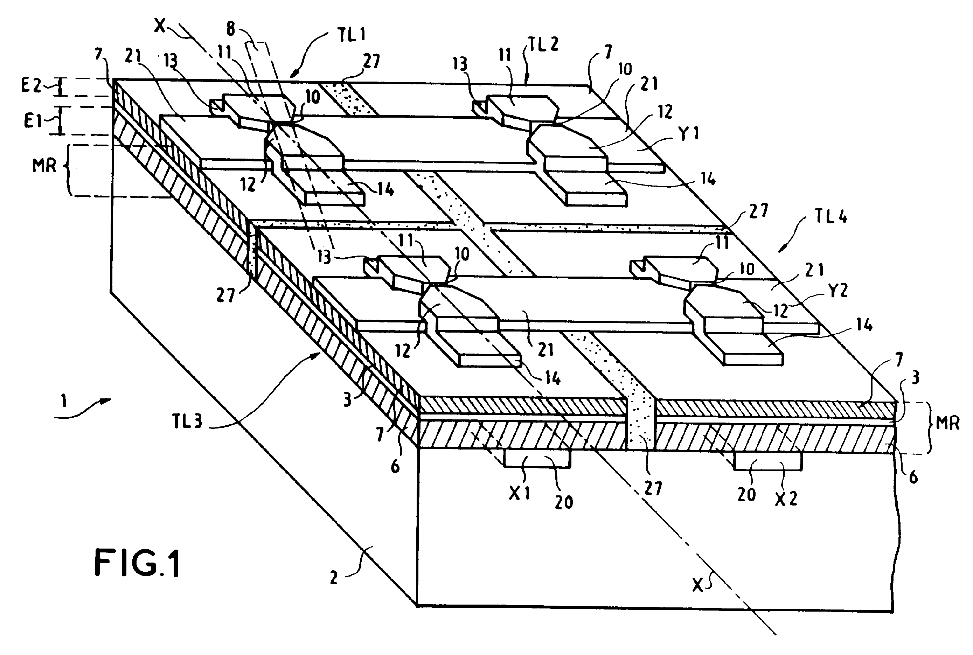

La figure 1 montre un dispositif magnétique de lecture 1 comportant plusieurs têtes magnétiques de lectures TL1, TL2, TL3, TL4 conformes à l'invention, réalisées sur un même substrat 2. Dans l'exemple non limitatif décrit, quatre têtes de lecture TL1 à TL4 sont représentées pour illustrer le fait que la structure de ces têtes de lecture se prête particulièrement bien à une réalisation collective de ces têtes sur un même substrat, soit pour les séparer ensuite par découpage pour en faire des têtes individuelles, soit pour réaliser un dispositif magnétique comprenant une pluralité de têtes de lecture. Mais le dispositif 1 peut comporter un nombre plus faible de ces têtes de lecture, ou un nombre beaucoup plus grand.

Chaque tête de lecture comporte un élément magnéto-résistif MR du type multicouches. Dans l'exemple non limitatif décrit, chaque élément magnéto-résistif MR comporte de façon en elle-même classique deux couches magnétiques 6,7 superposées dont l'une est une couche magnétique stable et l'autre est une couche magnétique sensible ; ces deux couches magnétiques 6,7 sont séparées par une couche non magnétique 3. La première couche magnétique 6, la plus proche du substrat 2, constitue la couche magnétique stable ; elle a une direction d'aimantation stable c'est-à-dire que son champ coercitif est largement plus grand que celui de la seconde couche magnétique 7. La seconde couche magnétique 7 constitue une couche magnétique sensible 7 dont la direction d'aimantation peut basculer sous l'influence d'un champ magnétique extérieur. Les deux couches magnétiques 6,7 et la couche non magnétique 3 sont réalisées de manière classique afin que les deux couches magnétiques 6,7 présentent un couplage anti ferro-magnétiques.

La couche magnétique stable 6 et la couche magnétique sensible 7 peuvent être constituées en un alliage ferromagnétique tel que par exemple Nickel-Cobalt Niₓ Co_{y} pour la couche magnétique stable 6, et Permalloy Fe₈₀ Ni₂₀ pour la couche magnétique sensible 7 ; et la couche non magnétique 3 peut être en argent ou en cuivre. Ou bien encore les deux couches ferro-magnétiques 6,7 peuvent être toutes les deux en un même matériau, le fer par exemple, mais avec des épaisseurs E1, E2 différentes, plusieurs fois plus grande pour l'épaisseur E1 de la couche magnétique stable 6 que pour l'épaisseur E2 de la couche sensible 7 : par exemple E1 de l'ordre de 1 µm et E2 de l'ordre de 0,01 µm ; l'épaisseur de la couche non magnétique étant par exemple de 0,001 µm.

La couche sensible 7 doit être soumise à l'influence d'un champ magnétique inscrit sur une piste magnétique 8 (pour plus de clarté de la figure, une unique piste magnétique 8 est représentée en traits pointillés). A cet effet, conformément à l'invention, ce champ magnétique est conduit jusqu'à l'élément magnéto-résistif MR à l'aide d'un circuit magnétique du type en anneau, comportant un entrefer 10 ; l'entrefer 10 est réalisé à proximité immédiate du plan de défilement de la piste magnétique 8. Cette disposition offre l'avantage de pouvoir disposer les couches 6,7,3 de l'élément magnéto-résistif MR dans des plans parallèles au plan du substrat et au plan de défilement de la piste 8, d'où résulte à la fois, d'une part la possibilité d'utiliser un grand nombre de têtes de lecture situées très près les unes des autres pour lire simultanément un grand nombre de pistes ; et d'où résulte d'autre part une disposition générale qui favorise la fabrication de ces têtes de lecture par une réalisation collective de ces têtes, notamment par la technologie des couches minces ; même si, éventuellement ces têtes doivent être séparées les unes des autres après la réalisation collective, pour constituer des têtes individuelles.

Le circuit magnétique comporte deux pôles magnétiques 11,12 disposées de part et d'autre de l'entrefer 10 comme montré sur la figure 1. Ces deux pôles magnétiques 11,12 sont prolongés chacun par une pièce magnétique 13,14 qui est en contact avec la couche magnétique sensible 7.

En fait le circuit magnétique est constitué par les deux pôles magnétiques 11,12, les deux pièces magnétiques 13,14 et la couche magnétique sensible 7 qui est insérée entre ce deux pièces magnétiques 13,14.

Les deux pôles magnétiques 11,12 sont contenus dans un plan très proche du plan de défilement de la piste 8 ; les deux pièces magnétiques 13, 14 sont situées dans un plan plus éloigné de la piste 8 que les pôles magnétiques 11,12 ; et enfin, la couche magnétique sensible 7 est située dans un plan encore plus éloigné de la piste 8. Ceci réalise la structure en anneau du circuit magnétique, le plan de l'anneau étant perpendiculaire au plan du substrat 2 et des couches 6,3,7 ; et la couche magnétique stable 6 étant extérieure à l'anneau, entre ce dernier et le substrat 2.

Une telle structure en anneau se prête particulièrement bien à réaliser les connexions d'alimentations électriques des couches magnétiques stables et des couches magnétiques sensibles 7 par des conducteurs situés dans des plans différents.

A cette fin, suivant une caractéristique de l'invention, pour chaque tête magnétique TL1 à TL4 , d'une part un premier conducteur électrique 20 est réalisé entre le substrat 2 et la couche magnétique stable 6, avec laquelle ce premier conducteur est en contact ; et d'autre part, un second conducteur électrique 21 est réalisé entre les têtes magnétiques 11,12 et la couche magnétique sensible 7 avec laquelle ce second conducteur est en contact. Le second conducteur 21 est réalisé sensiblement dans un même plan que celui des pièces magnétiques 13,14, de telle sorte qu'il peut passer dans l'anneau du circuit magnétique et s'étendre dans une direction sensiblement perpendiculaire à celle du premier conducteur 20.

Ainsi, le dispositif magnétique de lecture peut comporter d'une part, une pluralité de premiers conducteurs 20 constituant un réseau de conducteurs colonnes X1,X2 et d'autre part, une pluralité de second conducteurs 21 constituant un réseau de conducteurs lignes Y1,Y2 croisés avec les conducteurs colonnes. Chaque tête de lecture TL1 à TL4 est disposée sensiblement à une intersection d'un conducteur colonne X1,X2 avec un conducteur ligne Y1,Y2, et son alimentation électrique est réalisée à l'aide du conducteur colonne X1,X2 et du conducteur ligne Y1,Y2 qui forment l'intersection correspondante. Il faut noter que l'appellation "ligne" ou "colonne" donnée aux conducteurs est arbitraire et ne préjuge pas de leur orientation, et que les colonnes ne sont pas nécessairement perpendiculaires aux lignes.

Ainsi les têtes magnétiques TL1 à TL4 sont disposées en lignes et en colonnes auxquelles correspondent un conducteur ligne Y1,Y2 et un conducteur colonne X1,X2 ; chaque conducteur ligne Y1,Y2 étant en contact avec toutes les couches magnétiques sensibles 7 de la même ligne, et chaque conducteur colonne X1,X2 étant en contact avec toutes les couches magnétiques stables 6 de la même colonne.

La structure montrée à la figure 1 peut être réalisée de différentes manières toutes connues des spécialistes, notamment par la technique de couches minces. Cette technique est maintenant bien connue et n'exige pas d'être illustrée.

Le substrat 2 est en un matériau non magnétique, du verre par exemple, ou du silicium isolant.

Sur le substrat 2 on dépose une couche d'un matériau conducteur, par exemple du cuivre dans laquelle on réalise par gravure les conducteurs colonnes X1,X2. On peut également intégrer ces conducteurs dans le substrat 2, comme dans l'exemple de la figure 1, en réalisant de manière en elle-même classique des rainures qui sont ensuite remplies par le matériau conducteur.

On recouvre ensuite par exemple, l'ensemble d'une couche magnétique, destinée à former les couches magnétiques stables 6. Puis on dépose une couche non magnétique destinée à former les couches non magnétiques 3. On dépose ensuite sur l'ensemble une couche magnétique destinée à former les couches magnétiques sensibles 6. Puis les trois couches 7,6,3, sont gravées en forme d'îlots constituant chacun un élément magnéto-résistif MR. On dépose ensuite une couche isolante 27 pour séparer les ilôts, puis une couche d'un matériau conducteur qui est gravé pour constituer des conducteurs lignes Y1,Y2, c'est-à-dire des seconds conducteurs 21.

On réalise ensuite les pôles magnétiques 11,12 séparés par l'entrefer, par exemple en déposant successivement plusieurs couches de "Sendust" selon une technique connue, comme par exemple décrite dans une demande de brevet français 86 14974 au nom de THOMSON-CSF.

D'une manière en elle-même classique, le signal de mesure correspondant au champ magnétique inscrit sur la piste 8, consiste en une variation d'un courant de mesure qui circule entre la couche magnétique stable 6 et la couche magnétique sensible 7 quand une tension de commande est appliquée entre ces deux couches 6,7. Dans la configuration de la figure 1, la tension de commande est appliquée à l'aide d'un conducteur colonne X1,X2 et d'un conducteur ligne Y1,Y2, et le courant circule perpendiculairement au plan des couches magnétiques 6, 7 dans et entre ces deux conducteurs.

La structure de tête de lecture montrée à la figure 1 a été décrite en référence à une tête dans laquelle un effet magnéto-résistif est mis en oeuvre à l'aide d'une structure magnétique multicouches MR, cette structure magnétique multicouches étant du type comprenant une couche magnétique stable 6 et une couche magnétique sensible 7 séparées par une couche non magnétique 3. L'action du champ magnétique inscrit sur une piste magnétique à lire, provoque un basculement de l'orientation magnétique de la couche sensible, basculement qui donne lieu à une variation d'un courant électrique qui circule dans les deux couches magnétiques.

La couche non magnétique est électriquement conductrice et elle autorise le passage du courant entre les deux couches magnétiques. Le phénomène mis en oeuvre est dans ce cas purement magnéto-résistif.

Il est connu (voir par exemple l'article de S. MAEKAWA and U. GAFVERT paru dans I.E.E.E. TRANSACTION ON MAGNETICS, Vol. MAG-18, N° 2, March 1982) qu'une telle variation d'un courant peut être obtenue également en mettant en oeuvre un effet "Tunnel", dans une structure et dans des conditions similaires à celles relatives à l'effet purement magnéto-résistif, et qui obéissent aux mêmes règles en ce qui concerne notamment le couplage antiferromagnétique de la couche magnétique stable 6 et la couche magnétique sensible 7.

Dans le cas de l'effet "Tunnel", la couche non magnétique 3 est une couche isolante ou semiconductrice, par exemple en silicium d'une épaisseur de l'ordre de 0,01 µm ; les couches magnétiques 6, 7 étant d'une même nature que dans le cas précédent. En appliquant entre les deux couches magnétiques 6 et 7 une tension, on peut observer un courant qui par effet "Tunnel" circule entre les couches magnétiques 6,7. Le basculement de l'orientation magnétique de la couche sensible 7 provoque une modification de l'amplitude de ce courant "Tunnel", d'une manière semblable à la variation d'amplitude du courant dans le cas purement magnéto-résistif.

Aussi, compte tenu de ces similitudes de structure et d'effets, nous voulons que la définition "élément magnéto-résistif du type multicouches" définisse aussi bien une structure mettant en oeuvre l'effet purement magnéto-résistif qu'une structure mettant en oeuvre l'effet "Tunnel. "

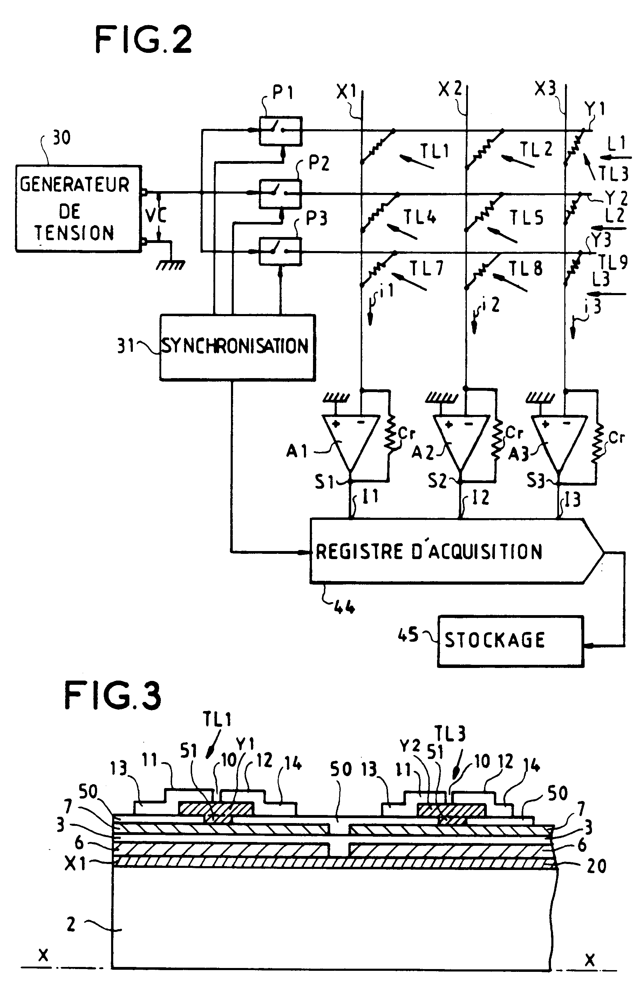

La figure 2 montre schématiquement à titre d'exemple non limitatif, un dispositif de lecture selon l'invention, dans lequel une pluralité de tête de lecture, semblables aux têtes de lecture TL1 à TL4 montrées à la figure 1, sont sélectionnées par un adressage de type matriciel.

Pour simplifier la description, le dispositif de lecture 1 montré à la figure 2 comporte seulement trois conducteurs lignes Y1,Y2,Y3 croisés avec trois conducteurs colonnes X1,X2,X3, donnant lieu à neuf intersections comportant chacune une tête de lecture TL1 à TL9 ; mais bien entendu, en pratique le nombre de conducteurs et lignes et colonnes peut être beaucoup plus grand.

Les têtes de lectures TL1 à TL9 étant du type magnéto-résistif multicouches, elles sont représentées sous la forme de résistances. Pour chaque tête de lecture, une extrémité de la résistance, constituée par exemple par la couche magnétique sensible 7, est reliée au conducteur ligne Y1 à Y3 de son intersection ; et l'autre extrémité de la résistance, c'est-à-dire la couche magnétique stable 6, est reliée à l'électrode colonne X1 à X3 de la même intersection. Ainsi par exemple une première ligne L1 de tête de lecture comprend les têtes TL1, TL2, TL3 dont les couches magnétiques stables 6 sont reliées respectivement au premier, second et troisième conducteurs colonne X1,X2 et X3 ; alors que les couches magnétiques stables 7 sont reliées au premier conducteur ligne Y1.

Les têtes de lecture des lignes L2 et L3 sont reliées d'une manière semblable aux conducteurs ligne et colonne de leur intersection.

Le dispositif de lecture 1 comporte un générateur de tension 30 produisant une tension de commande VC (par rapport à un potentiel de référence qui est la masse par exemple) ; la tension de commande VC est destinée à être appliquée aux têtes de lecture TL1 à TL9 et plus précisément aux éléments magnéto-résistif.

Le dispositif de lecture 1 comporte en outre un dispositif de portes comportant autant de portes P1 à P3 (analogiques par exemple) qu'il y a des conducteurs lignes Y1 à Y3.

Une sortie de chaque porte P1 à P3 est reliée à l'un des conducteurs lignes (Y1 à Y3) et les entrées de porte sont toutes reliées à une sortie du générateur de tension 30 délivrant la tension de commande VC.

Chaque porte P1 à P3 est commandée par un circuit de synchronisation 31, qui décide de l'état "bloquant" ou de l'état "passant" de la porte considérée. A l'état "passant" la tension de commande VC est appliquée au conducteur ligne Y1 à Y3, sous une faible impédance ; alors qu'à l'état "bloquant" le conducteur ligne n'est pas reliée au générateur de tension 30, sauf à travers une très haute impédance ; autrement dit, avec l'état "bloquant" d'une porte P1 à P3 donnée, le conducteur ligne correspondant est en "l'air", c'est-à-dire n'est relié à rien.

Les conducteurs colonnes X1 à X3 sont portés au potentiel de la masse, par l'intermédiaire d'un détecteur de courant A1 à A3 permettant de détecter des variations représentant l'effet magnéto-résistif.

Dans l'exemple non limitatif décrit, ces détecteurs sont des amplificateurs A1 à A3 à faible impédance d'entrée, en eux-mêmes classiques, ayant une première entrée - reliée à un conducteur colonne X1 à X3, et dont la seconde entrée + est reliée au potentiel de la masse afin de ramener ce potentiel (à basse impédance) sur le conducteur colonne ; chaque amplificateur A1 à A3 ayant une sortie S1 à S3 reliée à sa première entrée - par l'intermédiaire d'une résistance de contre-réaction Cr.

Chaque sortie S1 à S3 d'amplificateur A1 à A3 est reliée à une entrée I1 à I3 d'un registre d'acquisition 44 du type registre à décalage dont chaque case peut stocker une valeur analogique, une tension par exemple.

Le registre d'acquisition 44 est relié au circuit de synchronisation 31 qui décide notamment du transfert des données acquises dans le registre 44.

La lecture des pistes magnétiques sélectionnées est effectuée en adressant ligne par ligne les têtes magnétiques TL1 à TL9 correspondantes.

L'adressage de la première ligne L1 de tête de lecture est réalisé en commandant la première porte P1 par le circuit de synchronisation 31, pour la mettre à l'état "passant", alors que les portes P2 et P3 qui correspondent respectivement aux conducteurs lignes Y2 et Y3 (c'est-à-dire aux lignes L2 et L3 de têtes de lecture) sont conservées à l'état "bloquant". Dans ces conditions, la tension de commande VC (de l'ordre par exemple de quelques volts) est appliquée (à travers une basse impédance) uniquement aux trois premières têtes de lecture TL1, TL2, TL3 reliée au premier conducteur ligne Y1. Un courant i1, i2, i3 circule alors dans les colonnes X1 à X3.

Pour chaque conducteur colonne X1 à X3, ce courant est traduit en tension par les amplificateurs A1 à A3, et cette tension est chargée dans les entrées I1 à I3 correspondantes du registre d'acquisition 44. La valeur du courant nominal étant connue, toute différence avec cette valeur représente un signal dû à l'effet magnéto-résistif.

La première porte P1 est ensuite commandée pour être à nouveau à l'état "bloquant".

Puis le circuit de synchronisation 31 commande le transfert des données accumulées dans le registre d'acquisition 44, vers un dispositif de stockage de données 45.

Le registre d'acquisition 44 étant vidé, le circuit du synchronisation 31 commande la mise à l'état "passant" de la seconde porte P2 qui est reliée au second conducteur ligne Y2. Ceci réalise l'adressage des quatrième, cinquième et sixième têtes de lecture TL4, TL5, TL6 appartenant à la seconde ligne L2. Le fonctionnement est semblable à celui déjà décrit pour la ligne L1, c'est-à-dire que les signaux fournis par les amplificateurs A1 à A3 sont chargés dans le registre d'acquisition 44, puis transférés vers le dispositif de stockage de données 45.

Un même fonctionnement est répété pour la troisième ligne L3 qui regroupe les septième, huitième et neuvièmes têtes TL7, TL8, TL9.

Cette description d'un mode d'adressage matriciel constitue un exemple non limitatif. D'autres schémas peuvent être utilisés tout en restant dans le cadre de l'invention, dès lors que la tension de commande VC est appliquée à basse impédance à une tête de lecture sélectionnée, et n'est pas appliquée sinon à travers une haute impédance aux têtes de lecture non sélectionnées.

Dans le cas particulièrement d'un adressage matriciel de têtes de lecture TL1 à TL9 mettant en oeuvre l'effet purement magnéto-résistif, le courant délivré par chaque tête de lecture peut être ajusté et plus précisément réduit au niveau de chacune de ces têtes, en réduisant la section de conduction dans l'élément magnéto-résistif multicouches ce qui a pour effet d'augmenter sa résistance.

La figure 3 montre schématiquement à titre d'exemple non limitatif, une manière de réduire la section de conduction des éléments magnéto-résistifs multicouches, à l'aide d'une couche isolante 50 interposée en série avec un conducteur ligne.

Il est à noter que la section de conduction est limitée déjà à une surface de croisement, formée pour chaque tête de lecture par les surfaces en regards de l'électrode colonne croisée avec l'électrode ligne. Cette surface peut être encore trop importante pour la section de conduction, et cependant il n'est pas souhaitable de diminuer les dimensions les conducteurs ligne et colonnes afin de ne pas augmenter la résistance électrique qu'ils présentent, et ceci particulièrement quand un grand nombre de tête de lecture leur est connecté.

La solution montrée à la figure 3 consiste à interposer la couche isolante comme indiqué ci-dessus, et à réaliser dans cette couche 50 une ouverture ou fenêtre 51 ayant sensiblement la section que l'on désire conférer à la section de conduction.

La figure 3 est une vue en coupe de la structure de la figure 1, suivant un axe X-X montré à la figure 1, vue qui permet de représenter la fenêtre 51 au niveau des têtes de lecture TL1, TL3.

D'une même manière que dans l'exemple de la figure 1, pour chaque tête de lecture le substrat 2 porte le conducteur 20 ou conducteur colonne X1, sur lequel sont formées successivement :
- les couches magnétiques stables 6 ;
- les couches non magnétiques 3 conductrices ;
- les couches magnétiques sensibles 7.

On trouve ensuite la couche isolante 50 qui constitue un masque entre chaque couche magnétique sensible 7 et le conducteur 21 ou conducteur Y1,Y2 ligne correspondant. La couche isolante 50 a une épaisseur de l'ordre par exemple de 0,1 µm. L'action d'une telle couche isolante 50 est négligeable sur le champ magnétique dans le circuit magnétique, de telle sorte que les pièces magnétiques 13,14 et les pôles magnétiques 11,12 peuvent être réalisés sur cette couche isolante 50.

La fenêtre 51 ayant été réalisée avant le conducteur ligne Y1,Y2, le matériau conducteur dont est constitué ce dernier remplit la fenêtre 51, et assure le contact électrique entre la couche magnétique sensible 7 et le conducteur ligne Y1,Y2.

## Revendications

1. Dispositif magnétique de lecture, comportant un substrat (2) sur lequel est réalisé au moins une tête magnétique de lecture (TL1 à TL9) soumise à l'influence d'une piste magnétique (8), la tête de lecture comportant un élément magnéto-résistif (MR) du type multicouches comprenant un empilement formé d'au moins une première et une seconde couches magnétiques (6,7) formant respectivement, une couche magnétique (6) dont la direction d'aimantation est stable et une couche magnétique (7) dont la direction d'aimantation peut basculer plus facilement que celle de la première couche magnétique (6) sous l'influence d'un champ magnétique extérieur, les deux couches magnétiques (6,7) étant séparées par une couche non magnétique (3), un courant étant établi entre ces deux couches magnétiques en appliquant une tension de commande entre ces deux couches magnétiques, caractérisé en ce que la tête de lecture comporte un circuit magnétique dans lequel est inséré la seconde couche magnétique (7), le circuit magnétique étant ouvert par un entrefer (10) situé à proximité d'un plan de défilement de la piste magnétique (8), et en ce que la première couche magnétique (6) est située à l'extérieur du circuit magnétique.

2. Dispositif magnétique selon la revendication 1, caractérisé en ce que les première et seconde couches magnétiques (6,7) sont situées dans des plans parallèles au substrat (2) et au plan de défilement de la piste (8).

3. Dispositif magnétique selon l'une des revendications précédentes, caractérisé en ce que les première et seconde couches magnétiques (6,7) sont alimentées à l'aide d'un conducteur ligne (Y1 à Y3) relié à la seconde couche magnétique (7) et d'un conducteur colonne (X1 à X3) relié à la première couche magnétique (6), le conducteur colonne étant situé entre le substrat (2) et la première couche magnétique (6), et le conducteur ligne (Y1 à Y3) passant dans la région entourrée par le circuit magnétique.

4. Dispositif magnétique selon l'une des revendications précédentes, caractérisé en ce que la première couche magnétique (6) comporte une épaisseur (E1) largement plus grande que l'épaisseur (E2) de la couche magnétique sensible (7).

5. Dispositif magnétique selon l'une des revendications précédentes, caractérisé en ce que la couche non magnétique (3) est électriquement conductrice.

6. Dispositif magnétique selon la revendication 5, caractérisé en ce qu'une couche électriquement isolante (50) est interposée entre la seconde couche magnétique (7) et le conducteur ligne (Y1 à Y3), et en ce que la seconde couche magnétique (7) et le conducteur ligne sont électriquement en contact par l'intermédiaire d'une ouverture (51) formée dans la couche électriquement isolante (50).

7. Dispositif magnétique selon l'une des revendications 1 à 4, caractérisé en ce que la couche non magnétique (3) est électriquement isolante.

8. Dispositif magnétique selon l'une des revendications précédentes, caractérisé en ce qu'il comporte sur le même substrat (2) une pluralité de têtes de lecture (TL1 à TL9) semblables formant un réseau matriciel, un réseau de conducteurs lignes (Y1 à Y3) et un réseau de conducteurs colonnes (X1 à X3) croisés avec les conducteurs lignes, chaque conducteur ligne (Y1 à Y3) étant relié aux secondes couches magnétiques (7) d'une ligne (L1 à L3) correspondante de têtes de lecture et chaque conducteur colonne (X1 à X3) étant relié aux premières couches magnétiques (6) d'une colonne correspondante de têtes de lecture.

9. Dispositif magnétique selon la revendication 8, caractérisé en ce que chaque conducteur colonne (X1 à X3) est relié à un potentiel (masse) de la tension de commande par l'intermédiaire d'un détecteur de courant (A1 à A3) et en ce que chaque conducteur ligne (Y1 à Y3) est relié au second potentiel de la tension de commande par l'intermédiaire d'une porte (P1 à P3) susceptible d'être mise à l'état "passant" où elle présente une faible impédance, ou d'être mise à l'état "bloquant" où elle présente une grande impédance.

10. Dispositif selon la revendication 9, caractérisé en ce qu'il comporte des moyens (31,44) pour commander l'état "passant" d'une porte (P1 à P3) correspondant à une ligne (L1 à L3) de têtes de lecture sélectionnée, en maintenant les autres portes à l'état "bloquant".

## Patentansprüche

1. Magnetische Lesevorrichtung mit einem Substrat (2), auf dem wenigstens ein Lese-Magnetkopf (TL1 bis TL9) gebildet ist, der dem Einfluß einer Magnetspur (8) ausgesetzt ist, wobei der Lesekopf ein magnetoresistives Mehrschichtelement (MR) mit einem Stapel aus wenigstens einer ersten und einer zweiten Magnetschnicht (6, 7) enthält, die eine Magnetschicht (6), deren Magnetisierungsrichtung stabil ist, bzw. eine Magnetschicht (7), deren Magnetisierungsrichtung einfacher als die der ersten Magnetschicht (6) unter dem Einfluß eines äußeren Magnetfeldes umgeschaltet werden kann, bilden, wobei die zwei Magnetschichten (6, 7) durch eine nichtmagnetische Schicht (3) voneinander getrennt sind und ein Strom zwischen den zwei Magnetschichten durch Anlegen einer Steuerspannung zwischen die zwei Magnetschichten erzeugt wird, dadurch gekennzeichnet, daß der Lesekopf einen Magnetkreis enthält, in den die zweite Magnetschicht (7) eingefügt ist, wobei der Magnetkreis durch einen Luftspalt (10) geöffnet ist, der nahe einer Ebene der Vorbeibewegung der Magnetspur (8) liegt, und daß die erste Magnetschicht (6) außerhalb des Magnetkreises liegt.

2. Magnetvorrichtung nach Anspruch 1, dadurch gekennzeichnet, daß die erste und die zweite Magnetschicht (6, 7) in zum Substrat (2) und zur Ebene der Vorbeibewegung der Spur (8) parallelen Ebenen liegen.

3. Magnetvorrichtung nach einem der vorhergehenden Ansprüche, dadurch gekennzeichnet, daß die erste und die zweite Magnetschicht (6, 7) mit Hilfe eines mit der zweiten Magnetschicht (7) verbundenen Zeilenleiters (Y1 bis Y3) und eines mit der ersten Magnetschicht (6) verbundenen Spaltenleiters (X1 bis X3) gespeist werden, wobei der Zeilenleiter zwischen dem Substrat (2) und der ersten Magnetschicht (6) liegt und der Spaltenleiter (Y1 bis Y3) durch den vom Magnetkreis umgebenen Bereich führt.

4. Magnetvorrichtung nach einem der vorhergehenden Ansprüche, dadurch gekennzeichnet, daß die erste Magnetschicht (6) eine Dicke (E1) hat, die viel größer als die Dicke (E2) der empfindlichen Magnetschicht (7) ist.

5. Magnetvorrichtung nach einem der vorhergehenden Ansprüche, dadurch gekennzeichnet, daß die nichtmagnetische Schicht (3) elektrisch leitend ist.

6. Magnetvorrichtung nach Anspruch 5, dadurch gekennzeichnet, daß zwischen die zweite Magnetschicht (7) und den Spaltenleiter (Y1 bis Y3) eine elektrisch isolierende Schicht (50) eingefügt ist, und daß die zweite Magnetschicht (7) und der Zeilenleiter über eine Öffnung (50) elektrisch in Kontakt stehen, die in der elektrisch isolierenden Schicht (50) gebildet ist.

7. Magnetvorrichtung nach einem der Ansprüche 1 bis 4, dadurch gekennzeichnet, daß die nichtmagnetische Schicht (3) elektrisch isolierend ist.

8. Magnetvorrichtung nach einem der vorhergehenden Ansprüche, dadurch gekennzeichnet, daß sie auf dem gleichen Substrat (2) mehrere gleichartige Leseköpfe (TL1 bis TL9) aufweist, die ein Matrixgitter, ein Gitter aus Zeilenleitern (Y1 bis Y3) und ein Gitter aus sich mit den Zeilenleitern überkreuzenden Spaltenleitern (X1 bis X3) bilden, wobei jeder Zeilenleiter (Y1 bis Y3) mit den zweiten Magnetschichten (7) einer entsprechenden Zeile (L1 bis L3) von Leseköpfen verbunden ist und jeder Spaltenleiter (X1 bis X3) mit den ersten Magnetschichten (6) einer entsprechenden Spalte von Leseköpfen verbunden ist.

9. Magnetvorrichtung nach Anspruch 8, dadurch gekennzeichnet, daß jeder Spaltenleiter (X1 bis X3) an ein Massepotential (masse) der Steuerspannung über einen Stromdetektor (A1 bis A3) angeschlossen ist und daß jeder Zeilenleiter (Y1 bis Y3) an das zweite Potential der Steuerspannung über ein Gatter (P1 bis P3) angeschlossen ist, das in den Zustand "durchlassend", in dem es eine niedrige Impedanz hat, versetzt werden kann oder in den Zustand "sperrend", in dem es eine hohe Impedanz hat, versetzt werden kann.

10. Vorrichtung nach Anspruch 9, dadurch gekennzeichnet, daß die Mittel (31, 44) zum Steuern des Zustands "durchlassend" eines einer ausgewählten Zeile (L1 bis L3) von Leseköpfen entsprechenden Gatters (P1 bis P3) unter Beibehaltung der anderen Gatter im Zustand "sperrend" aufweist.

## Claims

1. Magnetic read device, including a substrate (2) on which is produced at least one magnetic read head (TL1 to TL9) subjected to the influence of a magnetic track (8), the read head including a magneto resistive element (MR) of the multi-layer type comprising a stack formed by at least a first and a second magnetic layer (6, 7) respectively forming a magnetic layer (6) the magnetization direction of which is stable and a magnetic layer (7) the magnetization direction of which can swing more easily than that of the first magnetic layer (6) under the influence of an external magnetic field, the two magnetic layers (6, 7) being separated by a non-magnetic layer (3), a current being established between these two magnetic layers by applying a control voltage between these two magnetic layers, characterized in that the read head includes a magnetic circuit in which the second magnetic layer (7) is inserted, the magnetic circuit being opened by a gap (10) situated close to a plane of crossing movement of the magnetic track (8), and in that the first magnetic layer (6) is situated outside the magnetic circuit.

2. Magnetic device according to Claim 1, characterized in that the first and second magnetic layers (6, 7) are situated in planes parallel to the substrate (2) and to the plane of crossing movement of the track (8).

3. Magnetic device according to one of the preceding claims, characterized in that the first and second magnetic layers (6, 7) are fed by use of a row conductor (Y1 to Y3) linked to the second magnetic layer (7) and of a column conductor (X1 to X3) linked to the first magnetic layer (6), the column conductor being situated between the substrate (2) and the first magnetic layer (6), and the row conductor (Y1 to Y3) passing into the region surrounded by the magnetic circuit.

4. Magnetic device according to one of the preceding claims, characterized in that the first magnetic layer (6) has a thickness (E1) which is considerably greater than the thickness (E2) of the sensitive magnetic layer (7).

5. Magnetic device according to one of the preceding claims, characterized in that the non-magnetic layer (3) is electrically conducting.

6. Magnetic device according to Claim 5, characterized in that an electrically insulating layer (50) is interposed between the second magnetic layer (7) and the row conductor (Y1 to Y3), and in that the second magnetic layer (7) and the row conductor are electrically in contact via an opening (51) formed in the electrically insulating layer (50).

7. Magnetic device according to one of Claims 1 to 4, characterized in that the non-magnetic layer (3) is electrically insulating.

8. Magnetic device according to one of the preceding claims, characterized in that, on the same substrate (2), it includes a plurality of similar read heads (TL1 to TL9) forming a matrix array, an array of row conductors (Y1 to Y3) and an array of column conductors (X1 to X3) intersecting with the row conductors, each row conductor (Y1 to Y3) being linked to the second magnetic layers (7) of a corresponding row (L1 to L3) of read heads and each column conductor (X1 to X3) being linked to the first magnetic layers (6) of a corresponding column of read heads.

9. Magnetic device according to Claim 8, characterized in that each column conductor (X1 to X3) is linked to a potential (mass) of the control voltage via a current detector (A1 to A3) and in that each row conductor (Y1 to Y3) is linked to the second potential of the control voltage via a gate (P1 to P3) capable of being put in the "on" state where it exhibits a low impedance, or of being put in the "off" state where it exhibits a high impedance.

10. Device according to Claim 9, characterized in that it includes means (31, 44) for controlling the "on" state of a gate (P1 to P3) corresponding to a row (L1 to L3) of selected read heads, while maintaining the other gates in the "off" state.
